# EUROPEAN PATENT APPLICATION

(11) **EP 4 311 166 A1**
(43) Date of publication of application: **24.01.2024**
(21) Application number: 22787225.6
(22) Date of filing: 13.01.2022
(51) Int. Cl.: H04L 9/32, H04L 9/06

(54) **TRANSMISSION METHOD FOR ENCRYPTED DATA AND RELATED DEVICE**

(30) Priority: 16.04.2021 CN 202110412944
(71) Applicant: Huawei Technologies Co., Ltd., Longgang Shenzhen, Guangdong 518129 (CN)
(72) Inventor: SU, Wei, Shenzhen, Guangdong 518129 (CN)
(74) Representative: Isarpatent
(86) International application number: PCT/CN2022/071704
(87) International publication number: WO 2022/217993

(57) **Abstract**

Embodiments of this application provide an encrypted data transmission method and a related device. An encrypted overhead frame dedicated to carrying encryption information and authentication information is constructed, and it is unnecessary to add encryption information and authentication information to each data frame, so that implementations are more flexible. The method in embodiments of this application includes: a transmit end device encrypts N first data frames based on first encryption information to obtain N first encrypted data frames, where N is an integer greater than or equal to 1, and each first data frame is used to carry data of a first service; next, the transmit end device performs authentication processing on the first encryption information and the N first encrypted data frames to obtain first authentication information; then, the transmit end device generates a first encrypted overhead frame, where the first encrypted overhead frame is used to carry the first encryption information and the first authentication information; and further, the transmit end device sends the N first encrypted data frames and the first encrypted overhead frame.

## Description

This application claims priority to Chinese Patent Application No. 202110412944.X, filed to China National Intellectual Property Administration on April 16, 2021, and entitled " ENCRYPTED DATA TRANSMISSION METHOD AND RELATED DEVICE", which is incorporated herein by reference in its entirety.

### TECHNICAL FIELD

This application relates to the field of optical transmission, and in particular, to an encrypted data transmission method and a related device.

### BACKGROUND

As optical transport network (Optical Transport Network, OTN) develops, more and more attention is paid to service transmission security, and encryption is becoming a technical feature that needs to be considered in the OTN technology. Currently, an existing encryption technology is mainly for a flexible optical transport network (Flexible Optical Transport Network, FlexO) frame.

Specifically, one FlexO frame is used as one encryption periodicity. Data in a payload area of the FlexO frame is encrypted, and the encrypted data is still placed in the payload area of the FlexO frame. Encryption information and authentication information are placed in an overhead area of the FlexO frame. However, for a manner of encrypting based on a fixed periodicity of the FlexO frame, encryption information and authentication information need to be added to each FlexO frame. This implementation has poor flexibility, and is difficult to meet transmission requirements of various types of services.

### SUMMARY

According to a first aspect, an encrypted data transmission method is provided by this application. The method is executed by a transmit end device: first, encrypting, based on first encryption information, N first data frames to obtain N first encrypted data frames, where each first data frame is used to carry data of a first service, and N is an integer greater than or equal to 1; next, performing authentication processing on the first encryption information and the N first encrypted data frames to obtain first authentication information; then, generating a first encrypted overhead frame used to carry the first encryption information and the first authentication information; and further, sending the N first encrypted data frames and the first encrypted overhead frame. In the foregoing method, an encrypted overhead frame dedicated to carrying encryption information and authentication information is constructed, and it is unnecessary to add encryption information and authentication information to each data frame, so that implementations are more flexible.

In some possible implementations, after the sending the N first encrypted data frames and the first encrypted overhead frame, the method further includes: encrypting, based on second encryption information, M first data frames to obtain M second encrypted data frames, where M is an integer greater than or equal to 1, and M is different from N; performing authentication processing on the second encryption information and the M second encrypted data frames to obtain the second authentication information; generating a second encrypted overhead frame used to carry the second encryption information and the second authentication information; and sending the M second encrypted data frames and the second encrypted overhead frame. In the foregoing method, for a same service, a duration of an encryption periodicity also changes. That is, according to a current practical requirement, a value of N may change, thereby further improving flexibility of this solution.

In some possible implementations, after the sending the N first encrypted data frames and the first encrypted overhead frame, and before the encrypting, based on second encryption information, M first data frames to obtain M second encrypted data frames, the method further includes: generating a third encrypted overhead frame used to carry the second encryption information and the first authentication information; and sending the N first data frames and the third encrypted overhead frame. It should be understood that there is a critical encryption periodicity between the encryption periodicity N and the encryption periodicity M. The encrypted overhead frame in the critical encryption periodicity is different from both the first encrypted overhead frame and the second encrypted overhead frame. Specifically, the critical encryption periodicity still belongs to the encryption periodicity N, but a third encrypted overhead frame needs to be inserted after the N first encrypted data frames. In other words, before the encryption periodicity changes from N to M, the second encryption information needs to be sent to the receive end device in advance, to notify the receive end device that the encryption periodicity changes from N to M, so that the receive end device can decrypt the second encrypted data frame in real time based on the second encryption information after receiving the second encrypted data frame.

In some possible implementations, the method further includes: encrypting, based on third encryption information, K second data frames to obtain K third encrypted data frames, where the second data frames are used to carry data of a second service, K is an integer greater than or equal to 1, and K is different from N; next, performing authentication processing on the third encryption information and the K third encrypted data frames to obtain third authentication information; further, generating a fourth encrypted overhead frame used to carry the third encryption information and the third authentication information; and sending the K third encrypted data frames and the fourth encrypted overhead frame. That is to say, in addition to encrypting and sending the data of the first service, the transmit end device may further encrypt and send data of other services at the same time. Different services have different sensitivity for latency. Therefore, different encryption periods may be used to encrypt for different service types, thereby enhancing scalability of this solution.

In some possible implementations, the first encryption information and the first authentication information are located in a payload area of the first encrypted overhead frame. Because the payload area in the first encrypted overhead frame has larger space and does not need to carry service data, the payload area is more convenient to carry the first encryption information and the first authentication information.

In some possible implementations, a size of the first data frame is the same as that of the first encrypted overhead frame. That is, the first encrypted overhead frame may use a frame structure same as that of the first data frame, thereby facilitating a unified standard.

In some possible implementations, the first encryption information includes but is not limited to a frame number (Frame Number, FN), a key index (Key Index, KI), and a cipher suite type (Cipher Suite Type, CST), a key exchange communication channel (Key exchange Communication Channel, KCC), a type of the first encrypted overhead frame, an encryption periodicity N, and the like. The first authentication information includes but is not limited to an authentication tag (Authentication Tag, AT). This application provides specific content included in the first encryption information and the first authentication information, thereby improving practicability of this solution.

In some possible implementations, the encrypting, based on first encryption information, N first data frames to obtain N first encrypted data frames includes: encrypting payloads in the N first data frames based on the first encryption information to obtain the N first encrypted data frames; or encrypting payloads and overheads in the N first data frames based on the first encryption information to obtain the N first encrypted data frames. In this implementation, encrypting the data frame is not limited to encrypting the payload data, and may further be encrypted together with some or all of the overheads, thereby enriching the implementations of this solution.

In some possible implementations, the first data frames are optical service unit (Optical Service Unit, OSU) frames, and are mainly applied to a small-granularity service transmission scenario.

According to a first aspect, an encrypted data transmission method is provided by this application. The method is executed by a transmit end device: first, encrypting, based on first encryption information, N data frames to obtain N first encrypted data frames, where N is an integer greater than 1; next, performing authentication processing on the first encryption information and the N first encrypted data frames to obtain first authentication information, where at least one of the N first encrypted data frames includes a first field, and the first field is used to carry the first encryption information and the first authentication information; and further, sending the N first encrypted data frames. In the foregoing method, a plurality of data frames may be encrypted, and the plurality of encrypted data frames are used as a whole to carry the first encryption information and the first authentication information, and it is unnecessary to add encryption information and authentication information to each data frame, so that implementations are more flexible.

In some possible implementations, after the sending the N first encrypted data frames, the method further includes: encrypting, based on second encryption information, M data frames to obtain M second encrypted data frames, where M is an integer greater than or equal to 1, and M is different from N; performing authentication processing on the second encryption information and the M second encrypted data frames to obtain the second authentication information, where at least one of the M second encrypted data frames includes a second field, and the second field is used to carry the second encryption information and the second authentication information; and sending the M second encrypted data frames. In the foregoing method, a size of an encryption periodicity may be flexibly configured according to an actual requirement, thereby further improving flexibility of this solution.

In some possible implementations, a start encrypted data frame in the N first encrypted data frames may carry the first encryption information and the first authentication information, where the first encryption information and the first authentication information are located in a start field of a payload area in the start encrypted data frame.

In some possible implementations, a start encrypted data frame in the N first encrypted data frames may carry the first encryption information, and an end encrypted data frame in the N first encrypted data frames may carry the first authentication information, where the first encryption information is located in the start field of the payload area in the start encrypted data frame, and the first authentication information is located in an end field of the payload area in the end encrypted data frame.

In some possible implementations, one subfield may be reserved in each first encrypted data frame, and N subfields are used to carry the first encryption information and the first authentication information, where a subfield in each first encrypted data frame is located in the start field in the payload area of the first encrypted data frame.

In some possible implementations, at least one bit may be reserved in a fixed position of the overhead area in each first encrypted data frame, and then all reserved bits in the N first encrypted data frames are used to carry the first encryption information and the first authentication information.

According to a third aspect, an encrypted data transmission method is provided by this application. The method is executed by a receive end device: first, receiving N first encrypted data frames and a first encrypted overhead frame that are sent by a transmit end device, where the N first encrypted data frames are obtained by encrypting N first data frames by the transmit end device based on first encryption information, N is an integer greater than or equal to 1, each first data frame is used to carry data of a first service, the first encrypted overhead frame is used to carry the first encryption information and first authentication information, and the first authentication information is obtained by performing authentication processing on the first encryption information and the N first encrypted data frames by the transmit end device; next, performing authentication processing on the received first encryption information and the received N first encrypted data frames to obtain authentication information; further, matching the locally generated authentication information and the received first authentication information; if the first authentication information is successfully matched, decrypting the N first encrypted data frames based on the first encryption information to obtain the N first data frames.

In some possible implementations, after the receiving N first encrypted data frames and a first encrypted overhead frame that are sent by a transmit end device, the method further includes: receiving M second encrypted data frames and a second encrypted overhead frame that are sent by the transmit end device, where the M second encrypted data frames are obtained by encrypting M first data frames by the transmit end device based on second encryption information, M is an integer greater than or equal to 1, and M is different from N, the second encrypted overhead frame is used to carry the second encryption information and second authentication information, and the second authentication information is obtained by performing authentication processing on the second encryption information and the M second encrypted data frames by the transmit end device; if the second authentication information is successfully matched, decrypting, based on the second encryption information, the M second encrypted data frames to obtain the M first data frames.

In some possible implementations, after the receiving N first encrypted data frames and a first encrypted overhead frame that are sent by a transmit end device, and before the receiving M second encrypted data frames and a second encrypted overhead frame that are sent by the transmit end device, the method further includes: receiving a third encrypted overhead frame, where the third encrypted overhead frame is used to carry the second encryption information and the first authentication information.

According to a fourth aspect, a transmit end device is provided by an embodiment of this application. The transmit end device includes: a processor, a memory, and a transceiver, where the processor, the memory, and the transceiver are interconnected through lines; the processor is configured to execute, by invoking program code in the memory, the encrypted data transmission method according to any one of the implementations according to the first aspect and the second aspect.

According to a fifth aspect, a receive end device is provided by an embodiment of this application. The receive end device includes: a processor, a memory, and a transceiver, where the processor, the memory, and the transceiver are interconnected through lines; the processor is configured to execute, by invoking program code in the memory, the encrypted data transmission method according to any one of the implementations according to the third aspect.

According to a sixth aspect, a communication system is provided by an embodiment of this application. The communication system includes the transmit end device shown in the fourth aspect and the receive end device shown in the fifth aspect.

According to a seventh aspect, a digital processing chip is provided by an embodiment of the present invention. The digital processing chip includes a processor and a memory, and the memory and the processor are interconnected through lines. The memory stores instructions, and the processor is configured to execute the encrypted data transmission method according to any implementation according to the first aspect to the third aspect.

According to an eighth aspect, a computer-readable storage medium is provided by an embodiment of this application. The computer-readable storage medium stores a computer program, and when the computer program is executed by hardware, the computer program can implement some or all steps of any method according to the first aspect to the third aspect.

In this embodiment of this application, the encryption periodicity may be flexibly set based on a service type. Specifically, after data in the N data frames is encrypted, an encrypted overhead frame may be inserted. The encrypted overhead frame is dedicated to carrying encryption information and authentication information. That is, the N data frames and one encrypted overhead frame form one encryption block. The value of N may be varied according to the service type, and is not a fixed value. In this way, it is convenient to meet the transmission requirements of various types of services. In addition, in this application, an encrypted overhead frame dedicated to carrying encryption information and authentication information is constructed, and it is unnecessary to add encryption information and authentication information to each data frame, so that implementations are more flexible.

### BRIEF DESCRIPTION OF DRAWINGS

FIG. 1 is a schematic diagram of a first embodiment of an encrypted data transmission method according to an embodiment of this application;
FIG. 2 is a schematic diagram of a structure of an OSU frame according to an embodiment of this application;
FIG. 3 is a schematic diagram of a structure of an encrypted overhead frame according to an embodiment of this application;
FIG. 4 is a schematic diagram of an encryption periodicity changing from N to M according to an embodiment of this application;
FIG. 5 is a schematic diagram of a second embodiment of an encrypted data transmission method according to an embodiment of this application;
FIG. 6 (a) is a first schematic diagram of carrying encryption information and authentication information by an encrypted data frame;
FIG. 6 (b) is a second schematic diagram of carrying encryption information and authentication information by an encrypted data frame;
FIG. 6 (c) is a third schematic diagram of carrying encryption information and authentication information by an encrypted data frame;
FIG. 7 is a schematic diagram of a third embodiment of an encrypted data transmission method according to an embodiment of this application;
FIG. 8 is a schematic diagram of a structure of a possible transmit end device;
FIG. 9 is a schematic diagram of a structure of a possible receive end device; and
FIG. 10 is a schematic diagram of a structure of a communication system according to this application.

### DESCRIPTION OF EMBODIMENTS

Embodiments of this application provide an encrypted data transmission method and a related device. In this application, an encrypted overhead frame dedicated to carrying encryption information and authentication information is constructed, and it is unnecessary to add encryption information and authentication information to each data frame, so that implementations are more flexible. It should be noted that, in this specification, claims, and accompanying drawings of this application, the terms "first", "second", and so on are intended to distinguish similar objects but do not limit a specific order or sequence. It should be understood that the foregoing terms may be interchanged in proper cases, so that the embodiments described in this application can be implemented in an order other than the content described in this application. Further, the term "include", and any variations thereof, are intended to cover non-exclusive inclusions. For example, a process, method, system, product, or device that includes a list of steps or units is not necessarily limited to those expressly listed steps or units, but may include other steps or units not expressly listed or inherent to such a process, method, system, product, or device.

This application is mainly applied to a data encryption scenario in OTN. A transmit end device encrypts the to-be-sent data frames based on preset encryption information to obtain encrypted data frames. Next, the transmit end device further performs authentication processing on the encryption information and the encrypted data frames to obtain authentication information. Further, the transmit end device needs to send all the encrypted data frames, the encryption information, and the authentication information to the receive end device. The receive end device first performs the authentication processing on the received encrypted data frames and preset encryption information to obtain authentication information. Then, the receive end device matches authentication information generated in local with the received authentication information. If the matching succeeds, the receive end device further decrypts the encrypted data frames based on the encryption information to obtain original data frames.

In the view of foregoing description, in addition to sending the encrypted data frames to the receive end device, the transmit end device further needs to send the encryption information and the authentication information to the receive end device in a specific manner. Taking a FlexO frame as an example, in a current manner, one FlexO frame is used as an encryption periodicity. The encryption information and the authentication information are placed in an overhead area of the FlexO frame, and are transmitted together with the FlexO frame. However, for a manner of encrypting based on a fixed periodicity of the FlexO frame, the encryption information and the authentication information need to be added to each FlexO frame. This implementation has relatively poor flexibility. For example, based on different service types, some services are sensitive to latency, and some services are insensitive to latency. For a service being relatively insensitive to latency, taking each data frame as a fixed periodicity to encrypt is not necessary. Encrypting by taking multiple data frames as a periodicity is more appropriate. In this way, implementation costs can be reduced. Therefore, this application provides an encrypted data transmission method having a more flexible implementation. The method is applicable for transmission requirements of various types of services.

It should be understood that the transmit end device and the receive end device are defined based on a data flow direction, and are not intended to limit functions thereof. The transmit end device also has a function for receiving data, and the receive end device also has a function for sending data. For ease of description, the following takes the transmit end device as a terminal for encrypting data, and takes the receive end device as a terminal for decrypting data.

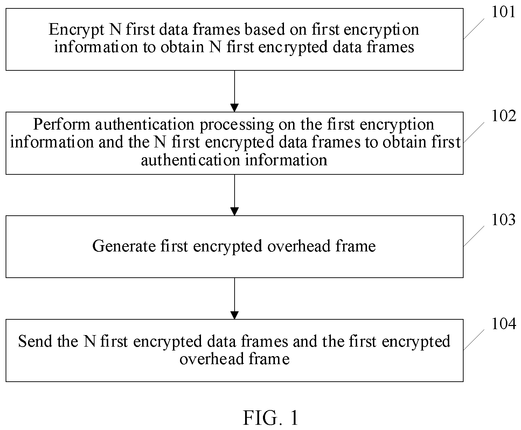

FIG. 1 is a schematic diagram of a first embodiment of an encrypted data transmission method according to an embodiment of this application. In this example, the encrypted data transmission method includes the following steps:
101. Encrypt N first data frames based on first encryption information to obtain N first encrypted data frames.

In this embodiment, the transmit end device and the receive end device may agree in advance on the encryption information that needs to be used. Specifically, the transmit end device encrypts the N first data frames based on the agreed first encryption information to obtain the N first encrypted data frames. N is an integer greater than or equal to 1. Each first data frame is used to carry data of a first service. It should be noted that, the first data frame used in this application may be an OSU frame, or may be an OTN frame such as an optical payload unit k (Optical Payload Unit k, OPUk) frame, an optical data unit k (Optical Data Unit k, ODUk), or an optical transport unit k (Optical Transport Unit k, OTUk) frame. It should be understood that the OSU frame may also be named in another manner. For example, the OSU frame may also be referred to as a flexible optical service unit (Flexible Optical Service Unit, OSUflex) frame. This is not specifically limited herein. The following mainly taking an OSU frame carrying a small-granularity service as an example for description.

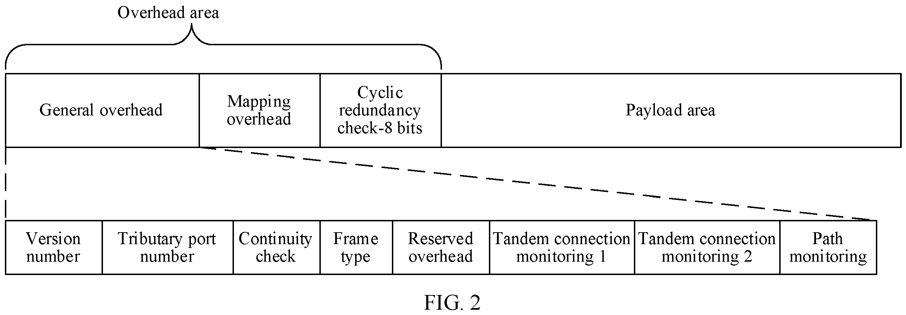

FIG. 2 is a schematic diagram of a structure of an OSU frame according to an embodiment of this application. As shown in FIG. 2, the OSU frame includes an overhead area and a payload area. The payload area is used to carry data of a service. The overhead area includes a general overhead, a mapping overhead, and a cyclic redundancy check-8 bits (Cyclic Redundancy Check-8 bits, CRC8). The general overhead may be further subdivided into a version number, a tributary port number (Tributary Port Number, TPN), a continuity check, a frame type (Frame Type, FT), a reserved overhead, a tandem connection monitoring 1 (Tandem Connection Monitoring TCM), a tandem connection monitoring 2, and a path monitoring (Path Monitoring, PM). The mapping overhead includes mapping information generated when a client service is mapped to the payload area of the OSU. For example, the mapping information indicates data volume of the client service mapped by the payload area of the OSU, and indicates client service clock information, and the like. It should be understood that a format of the overhead area in the OSU frame shown in FIG. 2 is merely an example. In practical application, there may be another format. This is not specifically limited herein.

Optionally, the transmit end device may encrypt only payload data of the OSU frame. Alternatively, the transmit end device may encrypt the payload data and all or a part of overheads of the OSU frame. For example, the transmit end device encrypts the payload data and the mapping overheads of the OSU frame.

It should be noted that, the foregoing encryption information includes but is not limited to an FN, a KI, a CST, a KCC, a type of a first encrypted overhead frame, an encryption periodicity N, and the like. The encryption periodicity N indicates that the transmit end device encrypts by taking the N first data frames as one periodicity.

102. Perform authentication processing on the first encryption information and the N first encrypted data frames to obtain first authentication information.

After encrypting the N first data frames to obtain the N first encrypted data frames, the transmit end device further performs authentication processing on the first encryption information and the N first encrypted data frames to obtain the first authentication information. Specifically, the transmit end device may execute the authentication processing on all information in the N first encrypted data frames and the first encryption information. Alternatively, the transmit end device may execute the authentication processing on the N first encrypted data frames and some information in the first encryption information. For example, the some information in the first encryption information may be other encryption information other than the KCC. It should be noted that, the first authentication information includes but is not limited to an AT.

103. Generate a first encrypted overhead frame.

In this embodiment, the transmit end device needs to insert one first encrypted overhead frame after the N first encrypted data frames. The first encrypted overhead frame is used to carry the first encryption information and the first authentication information. The N first encrypted data frames and one first encrypted overhead frame may be referred to as one encrypted block. It should be understood that the encrypted overhead frame may also be named in another manner. For example, the encrypted overhead frame may also be referred to as an overhead encrypted frame. This is not specifically limited herein. In a possible implementation, a size of the first encrypted overhead frame is the same as that of the first encrypted data frame. In other words, the first encrypted overhead frame may use a same frame format as the first encrypted data frame. The first encrypted overhead frame is specially used to carry the first encryption information and the first authentication information.

Preferably, Both the first encryption information and the first authentication information may be placed in a payload area of the first encrypted overhead frame. In addition, both the first encryption information and the first authentication information may be placed in the overhead area of the first encrypted overhead frame. Alternatively, the first encryption information and the first authentication information may be separately placed in the payload area and the overhead area of the first encrypted overhead frame. A specific separating manner is not specifically limited herein. The structure of the OSU frame is still taken as an example at following to introduce the first encrypted overhead frame.

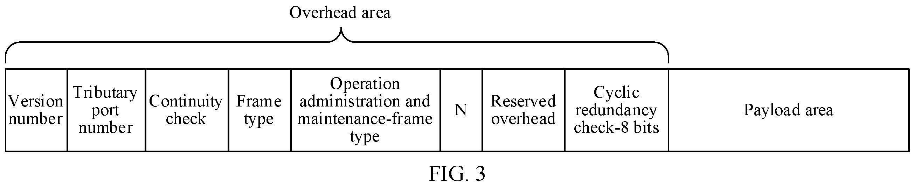

FIG. 3 is a schematic diagram of a structure of an encrypted overhead frame according to an embodiment of this application. As shown in FIG. 3, the type of the first encrypted overhead frame in the first encryption information may be indicated by a frame type (Frame Type, FT), or may be indicated by an operation administration and maintenance-frame type (Operation Administration and Maintenance-Frame Type, OAM-FT). The encryption periodicity N in the first encryption information is also placed in the overhead area of the first encrypted overhead frame. Other information in the first encryption information and the first authentication information may be placed in the payload area of the first encrypted overhead frame. It should be understood that the first encrypted overhead frame shown in FIG. 3 is merely an example. In practical application, the first encryption information and the first authentication information may be placed in the first encrypted overhead frame in another manner. This is not specifically limited herein.

104. Send the N first encrypted data frames and the first encrypted overhead frame.

After generating the first encrypted overhead frames, the transmit end device sends the N first encrypted data frames and the first encrypted overhead frame to the receive end device. It should be understood that, taking that the first encrypted data frame is an OSU frame as an example, the transmit end device may map the N first encrypted data frames and the first encrypted overhead frames to a payload area of the OPUk frame. Each first encrypted data frame or first encrypted overhead frame occupies a payload block in one OPUk frame. Moreover, the transmit end device may further map the OPUk frame to a container having a higher rate, such as an OTUk frame or a FlexO frame, for sending.

It should be noted that, for a first service currently transmitted, sensitivity of the first service to a delay may change with time. Therefore, a value of the encryption periodicity N may also change with time. For example, in a time periodicity of the current encryption periodicity N, the first service is a low latency service, a value of N is relatively small, and a frequency of inserting the first encrypted overhead frame into the first encrypted data frame is relatively high. Subsequently, the first service may change to a service with a common latency. A value of N becomes larger. A frequency of inserting the first encrypted overhead frame into the first encrypted data frame becomes lower. In other words, the encryption periodicity corresponding to the low latency service is relatively short, and the encryption periodicity corresponding to the common latency service is relatively short. The following further describes this solution by taking an example, in which the encryption periodicity is changed from N to M.

Specifically, the transmit end device encrypts the M first data frames based on second encryption information to obtain M second encrypted data frames. M is an integer greater than or equal to 1, and M is different from N. Next, the transmit end device performs the authentication processing on the second encryption information and the M second encrypted data frames to obtain second authentication information. Then, the transmit end device generates a second encrypted overhead frame used to carry the second encryption information and the second authentication information. Further, the transmit end device sends the M second encrypted data frames and the second encrypted overhead frames to the receive end device. It should be understood that an implementation, in which the encryption periodicity is M, is similar to the implementation, in which the encryption periodicity is N. For details, refer to related descriptions in step 101 to step 104. Details are not described herein again.

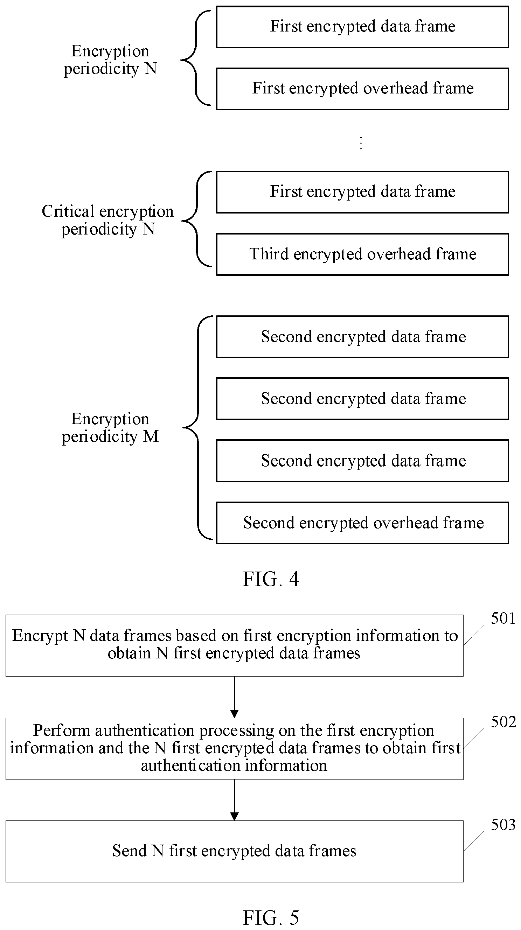

FIG. 4 is a schematic diagram of an encryption periodicity changing from N to M according to an embodiment of this application. As shown in FIG. 4, the first encrypted overhead frame is inserted in the encryption periodicity N in a radio of 1:1, and the second encrypted overhead frame is inserted in the encryption periodicity M in a radio of 3:1. There is a critical encryption periodicity between the encryption periodicity N and the encryption periodicity M. The encrypted overhead frame in the critical encryption periodicity is different from both the first encrypted overhead frame and the second encrypted overhead frame. Specifically, the critical encryption periodicity still belongs to the encryption periodicity N, but a third encrypted overhead frame needs to be inserted after the N first encrypted data frames. The third encrypted overhead frame is used to carry the second encryption information and the first authentication information. In other words, before the encryption periodicity changes from N to M, the second encryption information needs to be sent to the receive end device in advance, to notify the receive end device that the encryption periodicity changes from N to M, so that the receive end device can decrypt the second encrypted data frame in real time based on the second encryption information after receiving the second encrypted data frame. The receive end device may learn that the M second encrypted data frames and the second encrypted overhead frame after the third encrypted overhead frame are a new encryption periodicity. Similarly, in an initialization phase before the encryption periodicity N officially starts, the transmit end device may first construct a start encrypted overhead frame and send the start encrypted overhead frame to the receive end device. The authentication information in the start encrypted overhead frame may be generated based on invalid data. For example, the authentication information is all 0 bits or a specific pattern.

It should be noted that, in addition to encrypting and sending the data of the first service, the transmit end device may further encrypt and send data of other services at the same time. Different services have different sensitivity for latency. Therefore, different encryption periods may be used to encrypt for different service types. For example, the transmit end device encrypts K second data frames to obtain K third encrypted data frames. The second data frame is used to carry data of a second service. K is an integer greater than or equal to 1, and K is different from N. Subsequently, the transmit end device performs the authentication processing on third encryption information and the K third encrypted data frames to obtain third authentication information. Further, the transmit end device generates a fourth encrypted overhead frame used to carry the third encryption information and the third authentication information, and sends the K third encrypted data frames and fourth encrypted overhead frames. It should be understood that an implementation, in which the encryption periodicity is K is similar to the implementation, in which the encryption periodicity is N. For details, refer to related descriptions in step 101 to step 104. Details are not described herein again. Further, the encrypted first service and the encrypted second service may be mixedly mapped to the payload area of the OPUk frame for sending. It should be noted that, if different types of services have the same sensitivity for latency, the same encryption periodicity may also be used to encrypt for different types of services.

In this embodiment of this application, the encryption periodicity may be flexibly set based on a service type. Specifically, after data in the N data frames is encrypted, an encrypted overhead frame may be inserted. The encrypted overhead frame is dedicated to carrying encryption information and authentication information. That is, the N data frames and one encrypted overhead frame form one encryption block. The value of N may be varied according to the service type, and is not a fixed value. In this way, it is convenient to meet the transmission requirements of various types of services. In addition, in this application, an encrypted overhead frame dedicated to carrying encryption information and authentication information is constructed, and it is unnecessary to add encryption information and authentication information to each data frame, so that implementations are more flexible.

The following describes another encrypted data transmission method provided in this application. FIG. 5 is a schematic diagram of a second embodiment of an encrypted data transmission method according to an embodiment of this application. In this example, the encrypted data transmission method includes the following steps:
501. Encrypt N data frames based on first encryption information to obtain N first encrypted data frames.

In this embodiment, step 501 is similar to step 101 in the embodiment shown in FIG. 1, and details are not described herein again. A difference is therebetween that a value of N shall be greater than 1, that is, the transmit end device needs to encrypt a plurality of data frames each time.

502. Perform authentication processing on the first encryption information and the N first encrypted data frames to obtain first authentication information.

Different from the embodiment shown in FIG. 1, in this embodiment, the transmit end device does not need to construct the first encrypted overhead frame dedicate to carrying the first encryption information and the first authentication information. Instead, the N first encrypted data frames are used to carry the first encryption information and the first authentication information. Specifically, at least one of the N first encrypted data frames includes a first field. The first field is used to carry the first encryption information and the first authentication information. The following describes several possible implementations. It should be understood that implementations used in practical application include but are not limited to several listed below.

### First implementation:

At least one bit may be reserved in a fixed position of the overhead area in each first encrypted data frame, and then all reserved bits in the N first encrypted data frames are used to carry the first encryption information and the first authentication information. Taking the OSU frames shown in FIG. 2 as an example. Space of one bit may be reserved in the overhead field in each OSU frame. If 256 OSU frames are taken as an encryption periodicity, reserved 256 bits may be used to carry the first encryption information and the first authentication information. The following Table 1 provides a possible allocation manner. In practical application, flexible allocation may also be performed according to another manner. This is not specifically limited herein.

**Table 1**

| Sequence of OSU frames | Carried Information |
|---|---|
| Frames 1 to 128 | AT |
| Frames 129 to 192 | FN |
| Frames 193 to 194 | KI |
| Frames 195 to 200 | CST |
| Frames 201 to 208 | KCC |
| Frames 209 to 216 | N |
| Frames 217 to 256 | Reserved |

### Second implementation:

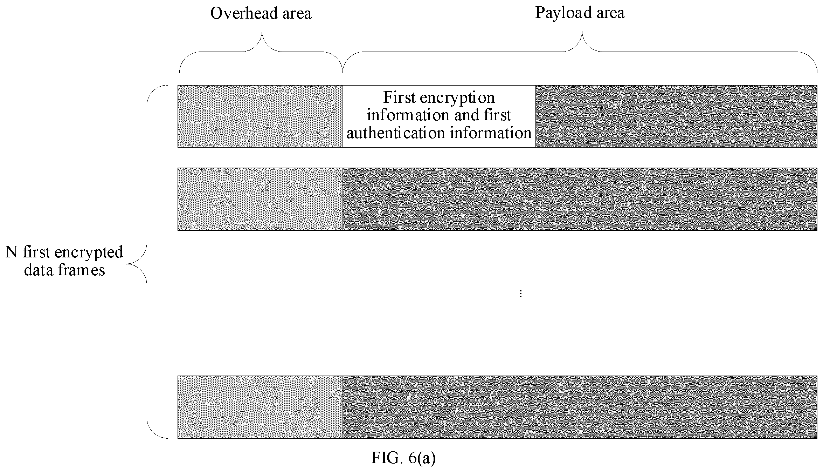

FIG. 6 (a) is a first schematic diagram of carrying encryption information and authentication information by an encrypted data frame. As shown in FIG. 6(a), a start encrypted data frame in the N first encrypted data frames may carry the first encryption information and the first authentication information, where the first encryption information and the first authentication information are located in a start field of a payload area in the start encrypted data frame.

### Third implementation:

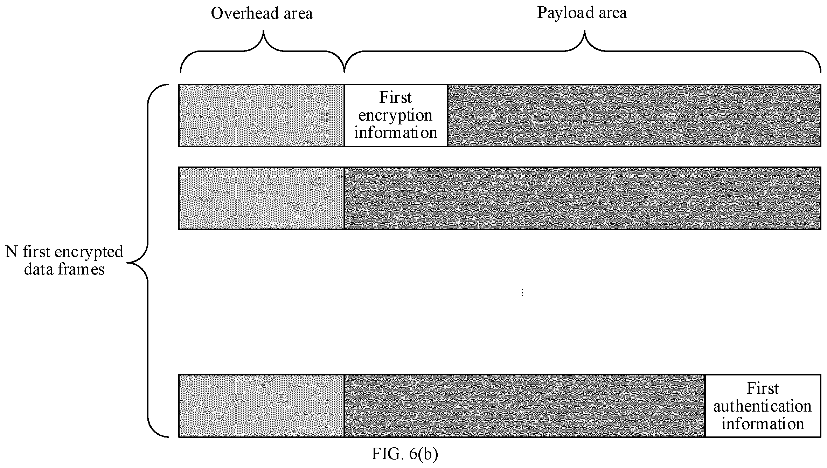

FIG. 6 (b) is a second schematic diagram of carrying encryption information and authentication information by an encrypted data frame. As shown in FIG. 6(b), a start encrypted data frame in the N first encrypted data frames may carry the first encryption information, and an end encrypted data frame in the N first encrypted data frames may carry the first authentication information, where the first encryption information is located in the start field of the payload area in the start encrypted data frame, and the first authentication information is located in an end field of the payload area in the end encrypted data frame.

### Fourth implementation:

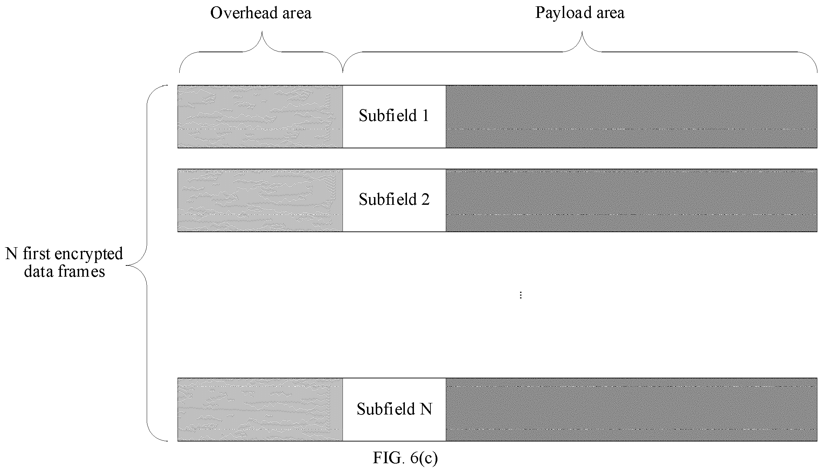

FIG. 6 (c) is a third schematic diagram of carrying encryption information and authentication information by an encrypted data frame. As shown in FIG. 6(c), one subfield may be reserved in each first encrypted data frame, and N subfields are used to carry the first encryption information and the first authentication information, where a subfield in each first encrypted data frame is located in the start field in the payload area of the first encrypted data frame.

It should be noted that, a value of the foregoing encryption periodicity N is not fixed. For a same service, the size of the encryption periodicity N may also be changed as latency sensitivity of the service changes. For different services, because different services are also different in latency sensitivity, different encryption periods N may be used for different services.

503. Send the N first encrypted data frames.

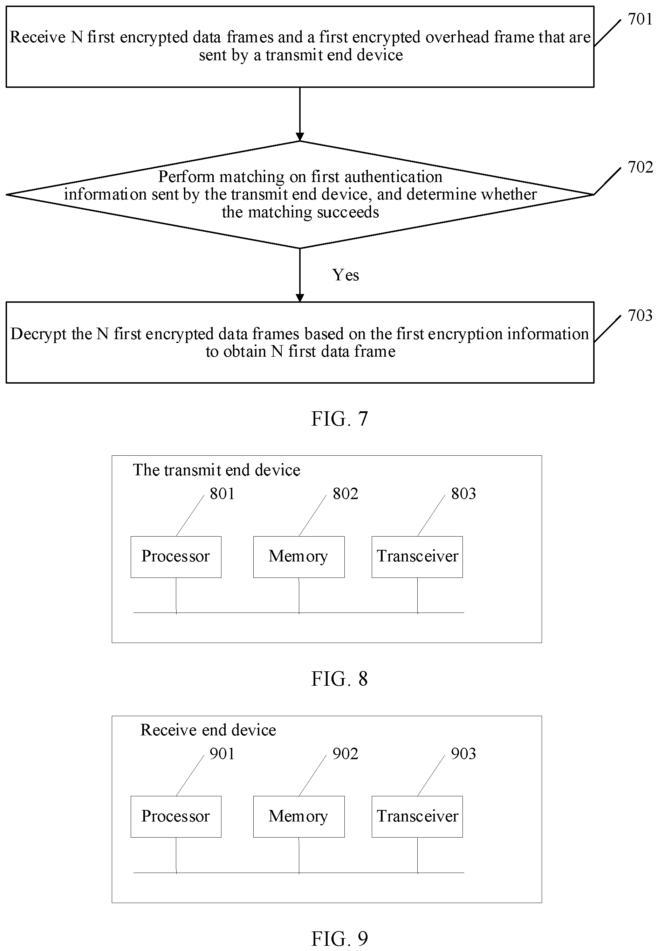

The foregoing describes a method, in which the transmit end device transmits the encrypted data. The following describes a processing procedure after the receive end device receives the encrypted data. FIG. 7 is a schematic diagram of a third embodiment of an encrypted data transmission method according to an embodiment of this application. In this example, the encrypted data transmission method includes the following steps:
701. Receive N first encrypted data frames and a first encrypted overhead frame that are sent by a transmit end device.

In this embodiment, for the description of the first encrypted data frames and the first encrypted overhead frame, refer to the related description of the embodiment shown in FIG. 1. Details are not described herein again.

702. Perform matching on first authentication information sent by the transmit end device, and determine whether the matching succeeds; and if the matching succeeds, execute step 703.

The receive end device may parse out the first encryption information and the first authentication information from the first encrypted overhead frame. In addition, the receive end device further performs authentication processing on the received first encryption information and the N first encrypted data frames to obtain authentication information. Further, the receive end device matches authentication information generated in local with the received first authentication information. If the matching succeeds, it indicates that the authentication succeeds.

703. Decrypt the N first encrypted data frames based on the first encryption information to obtain N first data frames.

If determining that the first authentication information is successfully matched, the receive end device may decrypt the N first encrypted data frames based on the first encryption information to obtain the N first data frames before encryption. It should be noted that, if parsing out the updated encryption information (for example, the N value in the encryption information changes) and the non-updated authentication information in an encryption periodicity, the receive end device can learn that the subsequent encryption periodicity may change. Specifically, the change may start from any encryption periodicity after the current encryption periodicity. For example, the change may start in the first encryption periodicity after the current encryption periodicity, or may start in the fifth encryption periodicity after the current encryption periodicity. This is not specifically limited herein. The receive end device still decrypts the current encryption periodicity by the non-updated encryption information, and decrypts the updated encryption periodicity by the updated encryption information. It should be understood that, no matter how the encryption periodicity changes, processing methods of the receive end device based on the encryption information and the authentication information are similar. For details, refer to descriptions of step 701 to step 703.

It should be noted that, the embodiments shown in FIG. 7 is an embodiment of the receive end device corresponding to the embodiments shown in FIG. 1. For the embodiments of the receive end device corresponding to the embodiments shown in FIG. 5, a processing procedure of the receive end device is similar to step 701 to step 703 in the embodiments shown in FIG. 7. Details are not described herein again.

The foregoing describes the encrypted data transmission method provided in this application. The following describes the transmit end device and the receive end device provided in this application.

FIG. 8 is a schematic diagram of a structure of a possible transmit end device. The transmit end device includes a processor 801, a memory 802, and a transceiver 803. The processor 801, the memory 802, and the transceiver 803 are interconnected through lines. The memory 802 is configured to store program instructions and data. In a possible implementation, the processor 801 is configured to execute operations of step 101 to step 103 in the embodiment shown in FIG. 1, and the transceiver 803 is configured to execute operations of step 104 in the embodiment shown in FIG. 1. In another possible implementation, the processor 801 is configured to execute operations of step 501 and step 502 in the embodiment shown in FIG. 5, and the transceiver 803 is configured to execute operations of step 503 in the embodiment shown in FIG. 5.

FIG. 9 is a schematic diagram of a structure of a possible receive end device. The receive end device includes a processor 901, a memory 902, and a transceiver 903. The processor 901, the memory 902, and the transceiver 903 are interconnected through lines. The memory 902 is configured to store program instructions and data. In a possible implementation, the processor 901 is configured to execute operations of step 702 and step 703 in the embodiment shown in FIG. 7, and the transceiver 903 is configured to execute operations of step 701 in the embodiment shown in FIG. 7.

It should be noted that, the processors shown in FIG. 8 and FIG. 9 may use a general-purpose central processing unit (Central Processing Unit, CPU), a general-purpose processor, a digital signal processor (digital signal processor, DSP), and an application specific integrated circuit (application specific integrated circuit, ASIC), a field programmable gate array (FPGA), or another programmable logic device, a transistor logic device, a hardware component, or any combination thereof. The memory shown in FIG. 8 and FIG. 9 may store an operating system and other application programs. When the technical solutions provided by embodiments of this application are implemented by software or firmware, a program code used to implement the technical solutions provided by embodiments of this application is stored in the memory, and is executed by the processor. In an embodiment, the processor may include a memory inside. In another embodiment, the processor and the memory are two independent structures.

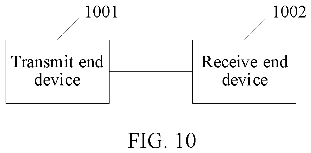

FIG. 10 is a schematic diagram of a structure of a communication system according to this application. The communication system includes a transmit end device 1001 and a receive end device 1002. The transmit end device 1001 is configured to execute some or all steps of any method in the embodiments shown in FIG. 1 and FIG. 5. The receive end device 1002 is configured to execute some or all steps of any method in the embodiment shown in FIG. 7.

A digital processing chip is further provided by an embodiment of this application. The digital processing chip may be applied to the foregoing transmit end device, or may be applied to the foregoing receive end device. A circuit and one or more interfaces for implementing functions of the foregoing processor are integrated in the digital processing chip. When a memory is integrated into the digital processing chip, the digital processing chip may implement the method steps in any one or more embodiments in the foregoing embodiments. When no memory is integrated in the digital processing chip, the digital processing chip may be connected to an external memory through an interface. The digital processing chip implements, based on the program code stored in the external memory, the actions executed by the optical transmission devices in the foregoing embodiment.

It may be clearly understood by a person skilled in the art that, for convenient and brief description, for a detailed working process of the foregoing system, apparatus, and unit, refer to a corresponding process in the foregoing method embodiments. Details are not described herein again.

A person of ordinary skill in the art may understand that all or some of the steps of the embodiments may be implemented by hardware or a program instructing related hardware. The program may be stored in a computer-readable storage medium. The storage medium may include a read-only memory, a random access memory, or the like. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

When software is used to implement the embodiments, the method steps in the foregoing embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state drive), or the like.

## Claims

1. An encrypted data transmission method, comprising:
encrypting, based on first encryption information, N first data frames to obtain N first encrypted data frames, wherein N is an integer greater than or equal to 1, and each first data frame is used to carry data of a first service;
performing authentication processing on the first encryption information and the N first encrypted data frames to obtain first authentication information;
generating a first encrypted overhead frame, wherein the first encrypted overhead frame is used to carry the first encryption information and the first authentication information; and
sending the N first encrypted data frames and the first encrypted overhead frame.

2. The method according to claim 1, wherein after the sending the N first encrypted data frames and the first encrypted overhead frame, the method further comprises:
encrypting, based on second encryption information, M first data frames to obtain M second encrypted data frames, wherein M is an integer greater than or equal to 1, and M is different from N;
performing authentication processing on the second encryption information and the M second encrypted data frames to obtain second authentication information;
generating a second encrypted overhead frame, wherein the second encrypted overhead frame is used to carry the second encryption information and the second authentication information; and
sending the M second encrypted data frames and the second encrypted overhead frame.

3. The method according to claim 2, wherein after the sending the N first encrypted data frames and the first encrypted overhead frame, and before the encrypting, based on second encryption information, M first data frames to obtain M second encrypted data frames, the method further comprises:
generating a third encrypted overhead frame, wherein the third encrypted overhead frame is used to carry the second encryption information and the first authentication information; and
sending the N first encrypted data frames and the third encrypted overhead frame.

4. The method according to any one of claims 1 to 3, wherein the method further comprises:
encrypting, based on third encryption information, K second data frames to obtain K third encrypted data frames, wherein K is an integer greater than or equal to 1, K is different from N, and each second data frame is used to carry data of a second service;
performing authentication processing on the third encryption information and the K third encrypted data frames to obtain third authentication information;
generating a fourth encrypted overhead frame, wherein the fourth encrypted overhead frame is used to carry the third encryption information and the third authentication information; and
sending the K third encrypted data frames and the fourth encrypted overhead frame.

5. The method according to any one of claims 1 to 4, wherein the first encryption information and the first authentication information are located in a payload area of the first encrypted overhead frame.

6. The method according to any one of claims 1 to 5, wherein a size of the first data frame is the same as that of the first encrypted overhead frame.

7. The method according to any one of claims 1 to 6, wherein the first encryption information comprises a type of the first encrypted overhead frame, a frame number FN, a key index KI, a cipher suite type CST, a key exchange communication channel KCC, and a value of N, and the first authentication information comprises an authentication tag AT.

8. The method according to any one of claims 1 to 7, wherein the encrypting, based on first encryption information, N first data frames to obtain N first encrypted data frames comprises:
encrypting payloads in the N first data frames based on the first encryption information to obtain the N first encrypted data frames; or
encrypting payloads and overheads in the N first data frames based on the first encryption information to obtain the N first encrypted data frames.

9. The method according to any one of claims 1 to 8, wherein the first data frames are optical service unit OSU frames.

10. An encrypted data transmission method, comprising:
encrypting, based on first encryption information, N data frames to obtain N first encrypted data frames, wherein N is an integer greater than 1;
performing authentication processing on the first encryption information and the N first encrypted data frames to obtain first authentication information, wherein at least one of the N first encrypted data frames comprises a first field, and the first field is used to carry the first encryption information and the first authentication information; and
sending the N first encrypted data frames.

11. The method according to claim 10, wherein after the sending the N first encrypted data frames, the method further comprises:
encrypting, based on second encryption information, M data frames to obtain M second encrypted data frames, wherein M is an integer greater than or equal to 1, and M is different from N;
performing authentication processing on the second encryption information and the M second encrypted data frames to obtain second authentication information, wherein at least one of the M second encrypted data frames comprises a second field, and the second field is used to carry the second encryption information and the second authentication information; and
sending the M second encrypted data frames.

12. The method according to claim 10 or 11, wherein a target encrypted data frame in the N first encrypted data frames comprises the first field, the target encrypted data frame is located at a start position of the N first encrypted data frames, and the first field is a start field of a payload area in the target encrypted data frame.

13. The method according to claim 10 or 11, wherein the N first encrypted data frames comprise a start encrypted data frame and an end encrypted data frame, the start encrypted data frame is located at a start position of the N first encrypted data frames, the end encrypted data frame is located at an end position of the N first encrypted data frames, the target field comprises an encryption field and an authentication field, the encryption field is used to carry the first encryption information, the authentication field is used to carry the first authentication information, the encryption field is a start field of a payload area in the start encrypted data frame, and the authentication field is an end field of a payload area in the end encrypted data frame.

14. The method according to claim 10 or 11, wherein the first field comprises N subfields, each first encrypted data frame comprises one subfield, and each subfield is a start field in a payload area in each first encrypted data frame, and the N subfields are used to carry the first encryption information and the first authentication information.

15. The method according to claim 10 or 11, wherein the first field comprises N subfields, each first encrypted data frame comprises one subfield, and each subfield is a field in an overhead area in each first encrypted data frame, and the N subfields are used to carry the first encryption information and the first authentication information.

16. An encrypted data transmission method, comprising:
receiving N first encrypted data frames and a first encrypted overhead frame that are sent by a transmit end device, wherein the N first encrypted data frames are obtained by encrypting N first data frames by the transmit end device based on first encryption information, N is an integer greater than or equal to 1, each first data frame is used to carry data of a first service, the first encrypted overhead frame is used to carry the first encryption information and first authentication information, and the first authentication information is obtained by performing authentication processing on the first encryption information and the N first encrypted data frames by the transmit end device; and
if the first authentication information is successfully matched, decrypting the N first encrypted data frames based on the first encryption information to obtain the N first data frames.

17. The method according to claim 16, wherein after the receiving N first encrypted data frames and a first encrypted overhead frame that are sent by a transmit end device, the method further comprises:
receiving M second encrypted data frames and a second encrypted overhead frame that are sent by the transmit end device, wherein the M second encrypted data frames are obtained by encrypting M first data frames by the transmit end device based on second encryption information, M is an integer greater than or equal to 1, M is different from N, the second encrypted overhead frame is used to carry the second encryption information and second authentication information, and the second authentication information is obtained by performing authentication processing on the second encryption information and the M second encrypted data frames by the transmit end device; and
if the second authentication information is successfully matched, decrypting, based on the second encryption information, the M second encrypted data frames to obtain the M first data frames.

18. The method according to claim 17, wherein after the receiving N first encrypted data frames and a first encrypted overhead frame that are sent by a transmit end device, and before the receiving M second encrypted data frames and a second encrypted overhead frame that are sent by the transmit end device, the method further comprises:
receiving a third encrypted overhead frame, wherein the third encrypted overhead frame is used to carry the second encryption information and the first authentication information.

19. A transmit end device, comprising: a processor, a memory, and a transceiver, wherein the processor, the memory, and the transceiver are interconnected through lines; the memory stores instructions; and
the processor is configured to execute, by invoking the instructions stored in the memory, the method according to any one of claims 1 to 15.

20. A receive end device, comprising: a processor, a memory, and a transceiver, wherein the processor, the memory, and the transceiver are interconnected through lines; the memory stores instructions; and
the processor is configured to execute, by invoking the instructions stored in the memory, the method according to any one of claims 16 to 18.

21. A communication system, comprising the transmit end device according to claim 19 and the receive end device according to claim 20.
